# FASCICULE DE BREVET EUROPEEN

(11) **EP 1 752 205 B1**
(45) Date de publication et mention de la délivrance du brevet: **28.10.2009**
(21) Numéro de dépôt: 06300860.1
(22) Date de dépôt: 04.08.2006
(51) Int. Cl.: B01D 53/047, C01B 3/56

(54) **Procédé de séparation de gaz dans une unité PSA à deux compresseurs**
Verfahren zur Trennung mindestens eines Gasgemisches in einer Druckwechseladsorptionseinheit
Method of separating at least one gas mixture in a PSA unit

(30) Priorité: 08.08.2005 FR 0552456
(43) Date de publication de la demande: 14.02.2007
(73) Titulaire: L'AIR LIQUIDE, Société Anonyme pour l'Etude et l'Exploitation des Procédés Georges Claude, 75007 Paris (FR)
(72) Inventeur: Monereau, Christian, 75011, PARIS (FR); Merino, Philippe, 75014, PARIS (FR); Fuentes, François, 78110, LE VESINET (FR)
(74) Mandataire: Pittis, Olivier

(56) Documents cités:
- FR-A- 2 682 611
- FR-A- 2 836 062
- FR-A- 2 857 884
- US-A- 4 402 712

## Description

La présente invention concerne les procédés de séparation dans une unité d'adsorption de type PSA d'au moins un mélange gazeux d'alimentation.

Les procédés de séparation par adsorption à variation de pression ou procédés PSA sont largement utilisés pour la production d'au moins un constituant du mélange gazeux d'alimentation, par exemple la production d'oxygène à partir de l'air, l'extraction de CO₂ de gaz de combustion ou la production d'hydrogène ou la séparation de gaz de synthèse.

Dans la suite de la description, la production d'hydrogène va être prise comme exemple particulier, non limitatif.

Les unités PSA de production d'hydrogène ou unités PSA H₂ fonctionnent selon des cycles comportant un ou plusieurs équilibrages, en vue dans ce dernier cas, de recycler le plus d'hydrogène possible et d'en augmenter la récupération, et avec une extraction du résiduaire à la plus basse pression possible, ce qui favorise à la fois l'investissement et les performances. Un tel cycle PSA H₂ est par exemple décrit dans le document EP-A-1023934.

Pour des raisons de sécurité, on adopte généralement une pression de régénération du PSA à peine supérieure à la pression atmosphérique, de l'ordre de 1,5 à 1,25 bar abs. On notera que dans d'autre cas, comme la séparation des gaz de l'air ou le traitement de gaz riches en CO₂, on peut utiliser une pression de régénération sub-atmosphérique, les machines de compression du résiduaire comprenant alors au moins un étage de pompage sous vide.

Le document FR 2857884 décrit un procédé de séparation dans une unité PSA comprenant l'étape de comprimer dans un compresseur le résiduaire extrait du PSA.

Le résiduaire ou « off gas » des unités PSA H₂ est généralement exploité en étant réintroduit dans un réseau de gaz carburant (« fuel gas ») de la raffinerie produisant le mélange gazeux d'alimentation. Le réseau de gaz carburant est à une pression comprise généralement entre 3,5 et 8 bars abs, ce qui impose de recomprimer jusqu'à cette pression le résiduaire extrait du PSA.

Pour des questions de fiabilité, la compression du résiduaire est généralement effectuée dans au moins deux compresseurs en parallèle, chacun traitant, en fonctionnement nominal, 50% du débit du flux de résiduaire.

En cas d'arrêt temporaire ou de maintenance d'un des compresseurs, le fonctionnement de l'unité doit être adapté pour tenir compte des performances du compresseur restant.

Une solution classique consiste à réduire de 50% le débit du gaz d'alimentation et des gaz de production de l'unité PSA.

Il a été proposé, en variante, d'utiliser deux compresseurs capables chacun de comprimer environ 65% du débit nominal du résiduaire. En fonctionnement normal, au moins l'un des compresseurs est utilisé en marche réduite et, en cas d'arrêt d'un des compresseurs, le compresseur restant peut alors assurer environ les 2/3 de la production nominale.

Toutefois, ces deux solutions connues sont relativement onéreuses en perte de production et/ou en coûts d'investissement.

La présente invention a pour objet d'améliorer la capacité de production de telles unités PSA lorsqu'un des moyens de compression du résiduaire (deuxième flux) est à l'arrêt, sans augmentation notable des coûts d'investissement.

Une solution selon la présente invention est alors un procédé de séparation par adsorption, dans une unité PSA à un ou plusieurs adsorbeurs fonctionnant selon des cycles de pression avec des paramètres opératoires donnés, d'au moins un mélange gazeux d'alimentation à une première pression P₁ avec production d'au moins un premier flux de mélange gazeux à une deuxième pression P₂ inférieure à P₁ et d'au moins un deuxième flux de mélange gazeux à une troisième pression P₃ inférieure à P₂, comprenant l'étape de comprimer, dans au moins deux compresseurs en parallèle, le deuxième flux à une quatrième pression P₄ supérieure à P3 caractérisé en ce qu'en cas d'arrêt temporaire d'un des compresseurs de deuxième flux, on modifie au moins un desdits paramètres opératoires de l'unité PSA pour augmenter à une cinquième pression P₅ supérieure à P₃ la pression du deuxième flux à la sortie de l'unité PSA.

Le procédé de l'invention permet de la sorte d'assurer un débit de production relativement proche du nominal, nettement supérieur à 50%, typiquement supérieur à 75%, moyennant seulement un léger surinvestissement par rapport à la solution la moins coûteuse en investissement, c'est à dire avec deux compresseurs ayant une capacité de 50% du débit du deuxième flux.

Selon le cas, le procédé de la présente invention peut comprendre, en outre, l'une ou plusieurs des caractéristiques suivantes :
- dans le mode opératoire modifié, le débit du mélange gazeux d'alimentation est réduit de moins de 50%, typiquement de moins de 20%, et le débit du premier flux est réduit de moins de 20%. En d'autres termes, le débit du mélange gazeux d'alimentation reste toujours supérieur ou égal à 50% du débit nominal, préférentiellement supérieur ou égal à 80%.
- dans le mode opératoire modifié, le débit du premier flux est réduit de moins de 25%, c'est-à-dire le débit du premier flux reste toujours supérieur ou égal à 75% du débit nominal de production.
- le mode opératoire modifié est préprogrammé dans le système de contrôle de commande de l'unité PSA.
- le mélange gazeux d'alimentation contient au moins trois constituants parmi H₂, CO, N₂, CO₂ et CH₄, le deuxième flux sortant étant un mélange appauvri en hydrogène
- le mélange gazeux d'alimentation est un mélange riche en hydrogène, le premier flux sortant étant de l'hydrogène sensiblement pur et le deuxième flux sortant un résiduaire combustible injectable dans un réseau de gaz carburant
- le mélange gazeux d'alimentation contient du CO₂, le deuxième flux sortant étant un mélange riche en CO₂
- le mélange gazeux d'alimentation et l'air, le premier flux sortant étant un mélange riche en oxygène et le deuxième flux sortant un mélange pauvre en oxygène.
- les paramètres opératoires de fonctionnement de l'unité PSA sont choisis parmi le débit du mélange gazeux d'alimentation ; le nombre d'équilibrages de pression mis en oeuvre durant chaque cycle de pression ; les niveaux des pressions de chaque équilibrage de pression ; et la durée du cycle de pression et/ou des étapes élémentaires dudit cycle.
- le débit du mélange gazeux d'alimentation est compris entre 500 Nm3/h et 200.10³ Nm³/h.
- le nombre d'équilibrages de pression est inférieur ou égal à 5, de préférence inférieur ou égal à 4.
- la durée d'un cycle de pression est comprise entre 1 et 30 minutes, de préférence inférieur ou égal à 15 minutes.
- l'unité PSA comprend de 2 à 20 adsorbeurs, de préférence entre 3 et 12 adsorbeurs.
- chaque adsorbeur contient au moins un lit de matériau adsorbant, en particulier de l'alumine activée et/ou du silica gel et/ou du charbon actif et/ou de la zéolite échangée ou non.

Dans le cadre de l'invention, le nombre d'équilibrages de pression correspond par définition au nombre d'adsorbeurs avec lequel l'adsorbeur en dépressurisation est mis successivement en communication. On définit ainsi un nombre entier d'équilibrages pouvant aller de 0 (cycle sans équilibrage) à un maximum généralement de 5. Des cycles à 1, 2, 3 ou 4 équilibrages sont largement décrits dans la littérature.

On dit qu'un équilibrage est complet si deux adsorbeurs A1 et A2 initialement à des pressions respectivement égales à P1 et P2 sont mis en communication jusqu'à l'obtention de la pression d'équilibre commune P3, aucun autre flux gazeux n'étant introduit ou soutiré du système durant cette étape.

Si l'adsorbeur A1 atteint en fin d'équilibrage une pression P4>P3 et/ou si l'adsorbeur A2 est repressurisé jusqu'à une pression P5<P3, on dit alors que l'équilibrage est incomplet.

Un équilibrage peut donc être incomplet si on arrête la communication entre adsorbeurs avant d'atteindre l'équilibre (P4>P3 et P5<P3), si on injecte ou soutire simultanément un autre flux. C'est par exemple le cas si l'adsorbeur A1 et par un flux issu de la production (premier flux de mélange) ou du mélange gazeux d'alimentation.

On dit que dans ce cas, on réduit l'équilibrage ou par extension, le nombre d'équilibrages. Par comparaison des quantités de gaz effectivement échangées pendant l'équilibrage par rapport à la quantité maximale de gaz échangeable en cas d'équilibrage complet, on peut définir un nombre d'équilibrages effectifs non entier, par exemple 0.8 ou 2.7.

Pour modifier un cycle PSA, on peut donc soit réduire un équilibrage, par exemple passer de 3.0 à 2.5 en arrêtant le dernier équilibrage en cours de route, soit supprimer un équilibrage, par exemple passer de 3 à 2 équilibrages. Dans tous les cas, on modifie les niveaux de pression en fin d'étapes d'équilibrage.

Une autre étape importante est l'étape générant le gaz d'élution, gaz qui sert à régénérer par balayage l'adsorbant se trouvant à la basse pression du cycle. Cette quantité de gaz est fournie par une dépressurisation complémentaire de l'adsorbeur. Elle se caractérise donc par les niveaux de pression initial et final de ladite étape. Les ouvrages spécialisés donnent des indications sur la quantité optimale de gaz d'élution.

On notera que la pression de fin d'étape étant la pression de début de l'étape suivante et que les adsorbeurs étant généralement liés lors des échanges gazeux, modifier une pression revient à modifier plus généralement la totalité du cycle de pression.

Plus généralement, on définit un cycle PSA par les variations de pression qu'il subit au cours du temps. S'agissant d'un procédé cyclique, les conditions de pression à la fin de la dernière étape sont identiques à celles initiales. Le temps de cycle est le temps que met un adsorbeur pour revenir à son état initial. Le cycle d'un PSA est généralement fractionné en temps de phase (égal normalement au nombre d'adsorbeurs), chaque phase pouvant être elle-même constituée d'étapes ou sous-étapes...

Les étapes élémentaires sont bien connues de l'homme du métier : adsorption, dépressurisation à co- ou contre-courant, génération du gaz d'élution, élution (purge), repressurisation à co- ou contre-courant.....par exemple et de façon non limitative.

Le fonctionnement d'un PSA est donc défini d'une part par son cycle de pression (type d'étape, durée, pression) et d'autre part par la composition, le débit et la température du mélange d'alimentation.

Tous ces paramètres constituent d'une manière générale les conditions opératoires de l'unité d'adsorption.

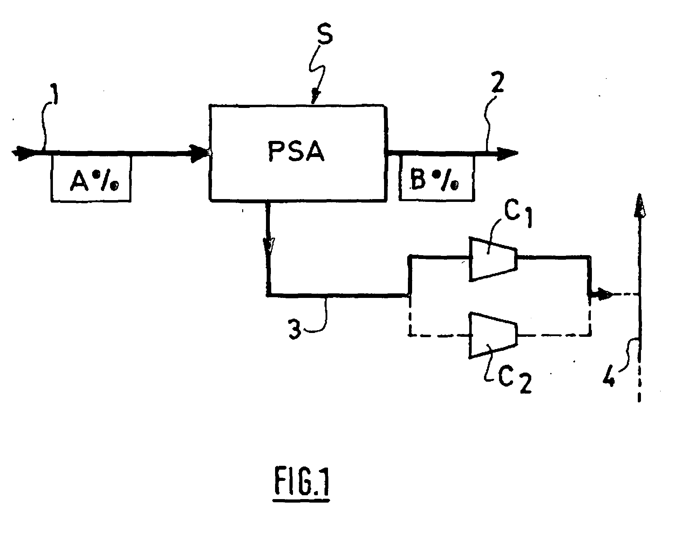

D'autres caractéristiques et avantages de l'invention ressortiront de la description suivante de modes de réalisation, donnés à titre illustratif mais non limitatif, faite en relation avec la figure annexée schématisant une installation PSA pour la mise en oeuvre du procédé selon l'invention.

Sur la figure annexée, on voit une unité de séparation PSA S recevant au moins un mélange gazeux d'alimentation à séparer 1 et produisant, en sortie, au moins un premier flux ou flux principal de production 2 et au moins un deuxième flux ou flux « résiduaire » 3.

L'unité de séparation PSA comprend plusieurs adsorbeurs mis en oeuvre de façon cyclique et comprenant chacun au moins un matériau adsorbant capable de retenir et restituer au moins l'un des constituants du mélange gazeux d'alimentation 1.

Pour l'exploitation du deuxième flux « résiduaire » 3 la pression de ce dernier, en sortie de l'unité S, est augmentée par au moins deux compresseurs en parallèle C₁, C₂ pour fourniture, typiquement à une ligne d'un réseau de gaz carburant 4.

En fonctionnement nominal, le débit A du mélange gazeux d'alimentation 1 est de 100%, le débit B du premier flux sortant « de production » 2 étant également de 100%, alors que le débit du deuxième flux 3 est de 50% pour chacun des compresseurs C₁, C₂ qui comprime de la pression P3 à la pression P₄ du fluide combustible circulant dans la ligne 4. Ce sont par définition les débits nominaux de l'installation.

Pour la suite de la description, on se réfèrera au cas particulier, non limitatif pour l'application du procédé de l'invention, d'une installation de production d'hydrogène avec une unité S comprenant typiquement 6 adsorbeurs pour traiter un débit A 100% de gaz d'alimentation 1 de 10.000 Nm³/h contenant 70 mol% d'hydrogène et des hydrocarbures, essentiellement du méthane.

La pression P₁ et la température du mélange gazeux d'alimentation 1 admis dans l'unité sont typiquement de 30 bars abs et de 35°C respectivement. La pression P₂ du flux d'hydrogène 2 est légèrement inférieure à P₁.

Pour obtenir un rendement élevé, chaque absorbeur de l'unité S est soumis à trois équilibrages successifs de pression jusqu'à une pression basse d'évacuation de résiduaire 3 d'environ 1,25 bar abs.

Avec une telle installation, on peut obtenir un rendement effectif d'extraction en hydrogène supérieur à 88% pour une pureté dépassant 99,99%, soit avec le débit d'alimentation A 100% de 10.000 Nm³/h , un débit B 100% du flux d'hydrogène 2 de 6.160 Nm³/h et un débit de résiduaire 3 de 3.840 Nm³/h, ce dernier étant porté à la pression P₄ dans la ligne 4 par les compresseurs C₁, C₂, chacun comprimant 1920 Nm³/h de gaz.

Dans les procédés classiques, en cas d'indisponibilité d'un des deux compresseurs C₁, C₂, les paramètres opératoires sont modifiés pour traiter un débit A égal à 50% du gaz d'alimentation 1 avec le même cycle de pression, mais avec un temps de phase doublé du fait de la réduction de l'alimentation, pour produire en sortie un débit B égal à 50% du flux 2, soit 3.080 Nm³/h d'hydrogène. Les 1920 Nm3/h de résiduaire sont comprimés par la machine restant en service.

Selon l'invention par contre, on modifie les paramètres opératoires de l'unité PSA pour augmenter la pression de régénération, à une valeur P₅ supérieure à la pression nominale P₃ de façon à accroître le débit molaire que peut comprimer le compresseur Ci restant en service. En augmentant la pression de régénération, on dégrade certes les performances potentielles du PSA en terme de rendement et de capacité, mais il existe des points de fonctionnement tels que le produit du débit de gaz d'alimentation que l'on peut traiter dans ces conditions par le rendement dégradé des conditions opératoires modifiées est supérieur aux 50% de production nominale obtenue par le procédé classique mentionné ci-dessus.

En partant de la solution classique qui consiste à traiter 50% du débit, si on réduit le temps de phase (qui vient d'être doublé suite à la réduction du débit d'alimentation comme précisé ci-avant), on va augmenter la pureté de l'hydrogène produit avec une baisse de la production d'hydrogène et une augmentation du résiduaire, par exemple de 1920 à 2110 Nm³/h. Pour évacuer ce résiduaire 2 en excès, le compresseur Cᵢ restant en service, dont le débit volumique est constant, voit sa pression d'aspiration augmenter de 1.25 à 1.375 bar abs. D'autre part, du fait que la pureté de l'hydrogène produit est augmentée au delà de la spécification, on peut augmenter le débit A du mélange gazeux d'alimentation 1. Il en résulte une augmentation de la production ainsi que du résiduaire, cette dernière conduisant, comme sus-mentionné, à une augmentation de la pression d'aspiration du compresseur. On peut alors par exemple revenir au temps de cycle nominal, ce qui va permettre à nouveau d'accroître le débit de charge tout en maintenant la pureté requise.

Il convient simultanément de modifier le cycle de pression, comme indiqué dans l'exemple ci-dessous, pour en tirer le meilleur parti.

On peut ainsi produire, selon l'invention, plus de 75% du débit nominal B % d'hydrogène avec un seul compresseur Cᵢ fonctionnant entre 2,5 bars abs à l'aspiration et 6,5 abs au refoulement, en prévoyant simplement un moteur d'entraînement de compresseur légèrement surdimensionné (d'environ 15%) ainsi que des réfrigérants adaptés à la puissance maximale à évacuer.

On réduit donc le débit de gaz à traiter tout en le conservant supérieur à 50% et on adapte, si nécessaire, le temps de phase pour obtenir la pureté requise de l'hydrogène produit. Le débit de gaz résiduel (off-gas) de l'unité PSA supérieur à 50% de celui correspondant à la marche nominale est évacué par le compresseur restant en service grâce à une pression d'aspiration supérieure à la pression nominale.

Ainsi, on peut déterminer, dès la conception de base de l'unité, un point de fonctionnement en marche « un seul compresseur en service » en se fixant comme seules contraintes le volume des adsorbeurs et le débit réel du compresseur. Ce point de fonctionnement sera déterminé de la même façon (c'est à dire à partir des mêmes outils théoriques ou expérimentaux) qu'est dimensionné le PSA H2 dans le cas nominal.

Dans le cas de l'exemple ci-dessus, en conservant le temps de phase nominal, on trouve un point de fonctionnement en régime « modifié » permettant de produire 5.290 Nm³/h d'hydrogène - soit environ 85% du nominal B % - avec un débit de mélange gazeux d'alimentation de 9.000 Nm³/h (soit donc 90% du débit nominal A%) pour un débit de résiduaire de 3.710 Nm3/h évacué par le compresseur en service Ci sous une pression d'aspiration de 2,4 bars abs. Pour ce faire, la pression du dernier équilibrage dans les adsorbeurs a été augmentée d'environ 8 bars abs à 10 bars abs, ce qui revient en fait à diminuer le nombre d'équilibrages suivant les définitions données précédemment.

Le cycle modifié ainsi choisi peut être pré-programmé dans le système de commande de l'unité PSA, comme enseigné dans le document WO-A-2004/000441.

Ce second cycle peut être proche du cycle de base si l'on se limite à faire un dernier équilibrage incomplet, c'est à dire à arrêter l'équilibrage en cours de route comme indiqué précédemment ou, au contraire, ce second cycle peut être sensiblement différent du cycle de base avec, par exemple, la suppression totale d'un (ou plusieurs) équilibrage, tel le passage de 3 à 2 équilibrages. Le choix du second cycle ne pose généralement pas de problème particulier compte tenu du grand nombre de possibilités qui se présentent à l'homme du métier et que l'on peut trouver dans la littérature.

## Revendications

1. Procédé de séparation par adsorption, dans une unité PSA (S) à un ou plusieurs adsorbeurs fonctionnant selon des cycles de pression avec des paramètres opératoires donnés, d'au moins un mélange gazeux d'alimentation (1) à une première pression P₁ avec production d'au moins un premier flux de mélange gazeux (2) à une deuxième pression P₂ inférieure à P₁ et d'au moins un deuxième flux de mélange gazeux (3) à une troisième pression P₃ inférieure à P₂, comprenant l'étape de comprimer, dans au moins deux compresseurs (C₁, C₂) en parallèle, le deuxième flux à une quatrième pression P₄ supérieure à P3 **caractérisé en ce qu'**en cas d'arrêt temporaire d'un des compresseurs (C₁, C₂) de deuxième flux (3), on modifie au moins un desdits paramètres opératoires de l'unité PSA (S) pour augmenter à une cinquième pression P₅ supérieure à P₃ la pression du deuxième flux (3) à la sortie de l'unité PSA.

2. Procédé selon la revendication 1, **caractérisé en ce que**, dans le mode opératoire modifié, le débit du mélange gazeux d'alimentation (1) est réduit de moins de 50%.

3. Procédé selon l'une des revendications précédentes, **caractérisé en ce que**, dans le mode opératoire modifié, le débit du premier flux (2) est réduit de moins de 25%.

4. Procédé selon l'une des revendications précédentes, **caractérisé en ce que** le mode opératoire modifié est pré-programmé dans le système de contrôle de commande de l'unité PSA (S).

5. Procédé selon l'une des revendications précédentes, **caractérisé en ce que** le mélange gazeux d'alimentation (1) contient au moins trois constituants choisis parmi H₂, CO, N₂, CO₂ et CH₄, le deuxième flux (3) étant un mélange appauvri en hydrogène.

6. Procédé selon l'une des revendications précédentes, **caractérisé en ce que** le mélange gazeux d'alimentation (1) est riche en hydrogène, le premier flux (2) est de l'hydrogène de production et le deuxième flux (3) un résiduaire combustible injectable dans un réseau de gaz carburant (4).

7. Procédé selon l'une des revendications 1 à 4, **caractérisé en ce que** le mélange gazeux d'alimentation (1) contient du CO₂, le deuxième flux (3) étant riche en CO₂.

8. Procédé selon l'une des revendications 1 à 4, **caractérisé en ce que** le mélange gazeux d'alimentation (1) est l'air, le premier flux (2) est riche en oxygène et le deuxième flux (3) un mélange appauvri en oxygène.

9. Procédé selon l'une des revendications précédentes, **caractérisé en ce que** les paramètres opératoires de fonctionnement de l'unité PSA sont choisis parmi :
- le débit du mélange gazeux d'alimentation (1),
- le nombre d'équilibrages de pression mis en oeuvre durant chaque cycle de pression,
- les niveaux des pressions de chaque équilibrage de pression
- les niveaux de pression de l'étape ou des étapes fournissant le gaz d'élution, et
- la durée de chaque cycle de pression et/ou la durée des étapes constitutives du cycle de pression.

10. Procédé selon l'une des revendications précédentes, **caractérisé en ce que:**
- le débit du mélange gazeux d'alimentation (1) est compris entre 500 et 200.10³ Nm³/h,
- le nombre d'équilibrages de pression est inférieur ou égal à 5, de préférence inférieur ou égal à 4,
- la durée d'un cycle de pression est comprise entre 1 et 30 minutes, de préférence inférieur ou égal à 15 minutes, et
- l'unité PSA comprend de 2 à 20 adsorbeurs, de préférence entre 3 et 12 adsorbeurs.

## Claims

1. Method for separating by adsorption, in a PSA unit (S) with one or more adsorbers, operating in pressure cycles with given operating parameters, at least one feed gas mixture (1) at a first pressure P₁ with production of at least a first gas mixture stream (2) at a second pressure P₂ lower than P₁, and at least one second gas mixture stream (3) at a third pressure P₃ lower than P₂, comprising the step of compressing the second stream in at least two compressors (C₁, C₂) in parallel to a fourth pressure P₄ higher than P₃, **characterized in that** in case of temporary shutdown of one of the compressors (C₁, C₂) of the second stream (3), at least one of the said operating parameters of the PSA unit (S) is changed to increase the pressure of the second stream (3) at the outlet of the PSA unit to a fifth pressure P₅ higher than P₃.

2. Method according to Claim 1, **characterized in that**, in the modified operating mode, the flow of feed gas mixture (1) is reduced by less than 50%.

3. Method according to one of the preceding claims, **characterized in that**, in the modified operating mode, the flow of the first stream (2) is reduced by less than 25%.

4. Method according to one of the preceding claims, **characterized in that** the modified operating mode is preprogrammed in the monitoring and control system of the PSA unit (S).

5. Method according to one of the preceding claims, **characterized in that** the feed gas mixture (1) contains at least three components selected from H₂, CO, N₂, CO₂ and CH₄, the second stream (3) being a hydrogen-lean mixture.

6. Method according to one of the preceding claims, **characterized in that** the feed gas mixture (1) is rich in hydrogen, the first stream (2) is production hydrogen, and the second stream (3) is a combustible offgas injectable into a fuel gas network (4).

7. Method according to one of Claims 1 to 4, **characterized in that** the feed gas mixture (1) contains CO₂, the second stream (3) being rich in CO₂.

8. Method according to one of Claims 1 to 4, **characterized in that** the feed gas mixture (1) is air, the first stream (2) is rich in oxygen and the second stream (3) is an oxygen-lean mixture.

9. Method according to one of the preceding claims, **characterized in that** the operating parameters of the PSA unit are selected from:
- the flow rate of the feed gas mixture (1),
- the number of pressure balancing stops carried out during each pressure cycle,
- the pressure levels of each pressure balancing,
- the pressure levels of the step or steps supplying the elution gas, and
- the duration of each pressure cycle and/or the duration of the steps making up the pressure cycle.

10. Method according to one of the preceding claims, **characterized in that**:
- the flow rate of the feed gas mixture (1) is between 500 and 200×10³ Sm³/h,
- the number of pressure balancing stops is lower than or equal to 5, preferably lower than or equal to 4,
- the duration of a pressure cycle is between 1 and 30 minutes, preferably shorter than or equal to 15 minutes, and
- the PSA unit comprises 2 to 20 adsorbers, preferably between 3 and 12 adsorbers.

## Patentansprüche

1. Verfahren zur Trennung durch Adsorption in einer PSA-Einheit (Druckwechseladsorptionseinheit) (S) mit einem oder mehreren Adsorbern, die in Abhängigkeit von Druckzyklen mit gegebenen Betriebsparametern arbeitet, mindestens eines Einsatzgasgemischs (1) bei einem ersten Druck P₁, mit Produktion mindestens eines ersten Gasgemischstroms (2) bei einem zweiten Druck P₂, der kleiner als P₁ ist, und mindestens eines zweiten Gasgemischstroms (3) bei einem dritten Druck P₃, der kleiner ist als P₂, das den Schritt umfasst, in mindestens zwei Verdichtern (C₁, C₂) den zweiten Strom bei einem vierten Druck P₄, der größer ist als P₃, parallel zu verdichten, **dadurch gekennzeichnet, dass** im Fall eines vorübergehenden Stillstands eines der Verdichter (C₁, C₂) des zweiten Stroms (3), mindestens einer der Betriebsparameter der PSA-Einheit (S) modifiziert wird, um den Druck des zweiten Stroms (3) am Ausgang der PSA-Einheit auf einen fünften Druck P₅ zu erhöhen, der größer ist als P₃.

2. Verfahren nach Anspruch 1, **dadurch gekennzeichnet, dass** im modifizierten Betriebsmodus die Durchflussgeschwindigkeit des Einsatzgasgemischs (1) um mindestens 50 % reduziert ist.

3. Verfahren nach einem der vorhergehenden Ansprüche, **dadurch gekennzeichnet, dass** im modifizierten Betriebsmodus, die Durchflussgeschwindigkeit des ersten Stroms (2) um mindestens 25 % reduziert ist.

4. Verfahren nach einem der vorhergehenden Ansprüche, **dadurch gekennzeichnet, dass** der modifizierte Betriebsmodus im Steuer- und Kontrollsystem der PSA-Einheit (S) vorprogrammiert ist.

5. Verfahren nach einem der vorhergehenden Ansprüche, **dadurch gekennzeichnet, dass** das Einsatzgasgemisch (1) mindestens drei Bestandteile enthält, die aus H₂, CO, N₂, CO₂ und CH₄ ausgewählt sind, wobei der zweite Strom (3) ein an Wasserstoff verarmtes Gemisch ist.

6. Verfahren nach einem der vorhergehenden Ansprüche, **dadurch gekennzeichnet, dass** das Einsatzgasgemisch (1) reich an Wasserstoff ist, der erste Strom (2) Produktionswasserstoff und der zweite Strom (3) ein Abgas ist, das in ein Brenngasnetz (4) eingespeist werden kann.

7. Verfahren nach einem der Ansprüche 1 bis 4, **dadurch gekennzeichnet, dass** das Einsatzgasgemisch (1) CO₂ enthält, wobei der zweite Strom (3) reich an CO₂ ist.

8. Verfahren nach einem der Ansprüche 1 bis 4, **dadurch gekennzeichnet, dass** das Einsatzgasgemisch (1) Luft ist, wobei der erste Strom (2) reich an Sauerstoff und der zweite Strom (3) ein an Sauerstoff verarmtes Gemisch ist.

9. Verfahren nach einem der vorhergehenden Ansprüche, **dadurch gekennzeichnet, dass** die Betriebsparameter zum Betreiben der PSA-Einheit ausgewählt sind aus:
- der Durchflussgeschwindigkeit des Einsatzgasgemischs (1),
- der Anzahl der Druckausgleichsvorgänge, die während jedes Druckzyklus durchgeführt werden,
- den Druckpegeln jedes Druckausgleichs
- den Druckpegeln des Schritts oder der Schritte, die das Elutionsgas bereitstellen, und
- der Dauer jedes Druckzyklus und/oder der Dauer der Schritte, die den Druckzyklus bilden.

10. Verfahren nach einem der vorhergehenden Ansprüche, **dadurch gekennzeichnet, dass:**
- die Durchflussgeschwindigkeit des Einsatzgasgemischs (1) im Bereich zwischen 500 und 200.10³ Nm³/Std. liegt,
- die Anzahl der Druckausgleichsvorgänge kleiner oder gleich 5, bevorzugt kleiner oder gleich 4, ist,
- die Dauer eines Druckzyklus im Bereich zwischen 1 und 30 Minuten liegt, bevorzugt kleiner oder gleich 15 Minuten ist, und
- die PSA-Einheit 2 bis 20 Adsorber, bevorzugt zwischen 3 und 12 Adsorber umfasst.
